# EUROPEAN PATENT APPLICATION

(11) **EP 4 271 143 A2**
(43) Date of publication of application: **01.11.2023**
(21) Application number: 23167120.7
(22) Date of filing: 06.04.2023
(51) Int. Cl.: H05H 1/24, C02F 1/46

(54) **DIELECTRIC ASSEMBLY FOR NON-THERMAL PLASMA REACTOR**

(30) Priority: 07.04.2022 US 202263328425 P; 28.03.2023 US 202318191113
(71) Applicant: Milton Roy, LLC, Davidson, NC 28036 (US)
(72) Inventor: BUCHANAN, Walter Riley, Lenexa, 66219 (US); SHAUGHNESSY, John Peter, Overland Park, 66204 (US)
(74) Representative: Murgitroyd & Company

(57) **Abstract**

A dielectric assembly for a plasma reactor includes a first dielectric layer having a first surface, and a second surface opposite the first surface, a second dielectric layer, thinner than the first dielectric layer, have a third surface, and a fourth surface opposite the third surface, and an electrode disposed between the second surface and the third surface. The electrode may be ring shaped and/or disposed on a spherical surface. A non-reactive coating may be disposed on a surface of the dielectric assembly exposed to a plasma chamber of the plasma reactor. The coating may be disposed in the form of rings with a gap between each ring.

## Description

### TECHNICAL FIELD

The present disclosure relates to a dielectric assembly including an electrode for a plasma reactor and methods that utilize the dielectric assembly in a plasma reactor.

### BACKGROUND

A plasma reactor may include at least two electrodes which are spaced apart to impart a high voltage to a space or region through which a gas and/or liquid is passed. Typically, a voltage difference is applied to the electrodes such that an electric field is established between them. A stream of gas may be introduced to the space between the electrodes such that it passes through the electric field. Exposure to the electric field generally ionizes the gas and creates a plasma. If a stream of liquid (or other gas, or any fluid) is also introduced to the space between the electrodes, the gas and fluid may form two layers flowing in parallel, and a plasma may form in the gas and at the surface of the fluid. Ions resulting from the plasma may be injected, or may otherwise enter, into the fluid as it passes through the electric field. Plasma injection into fluid may be utilized for applications such as: in-line liquid hydrocarbon fuel reforming for hydrogen enrichment to improve the fuel economy of internal combustion engines; nitrogen fixing by direct nitrogen ion injection into water; destruction of high molecular weight hydrocarbons (proteins and pharmaceuticals) in drinking water; ammonia/nitrate sequestering for treatment of high nitrate content water; demineralization (water softening) for consumer and industrial markets; nitrification of water for agricultural use; pH modification of liquid streams; and disinfection, oxygen and ozone injection, among other applications.

Plasma reactors can generate relatively large pressure swings and acoustic energy, and handle potentially corrosive gas and/or liquid constituents, all of which can impact the lifetime of the electrodes operating within the plasma reactor. A dielectric barrier typically surrounds or encapsulates the electrode(s) to help protect and isolate the electrode(s) from the aforementioned conditions and constituents.

### SUMMARY OF THE INVENTION

According to a first aspect a dielectric assembly for a plasma reactor is provided, comprising: a first dielectric layer having a first surface, and a second surface opposite the first surface; a second dielectric layer, thinner than the first dielectric layer, have a third surface, and a fourth surface opposite the third surface; and an electrode disposed between the second surface and the third surface.

In a preferred embodiment the electrode is planar and is formed in a shape of a ring having a width that is defined by an inner diameter and an outer diameter.

In a preferred embodiment the electrode is disposed on one of the second surface and the third surface.

In a preferred embodiment a non-reactive coating is disposed on the fourth surface.

In a preferred embodiment the non-reactive coating has a diameter that is greater than the outer diameter of the ring.

In a preferred embodiment the non-reactive coating is disposed as a plurality of concentric rings, wherein adjacent rings are separated by a gap.

In a preferred embodiment the gap is filled with anti-electric field spreading compound.

In a preferred embodiment the gap does not overlap with the electrode or the gap overlaps with the electrode.

In a preferred embodiment the second surface and the third surface are coupled to another via heat fusing.

In a preferred embodiment the second surface and the third surface are coupled to one another with glue.

In a preferred embodiment the glue has a thermal expansion coefficient that is substantially similar to a thermal expansion coefficient of the first dielectric layer and the second dielectric layer.

In a preferred embodiment at least one of the first dielectric layer and the second dielectric layer is comprised of one of borosilicate glass, boron nitride, and aluminum oxide (AL₂O₃).

In a preferred embodiment a through hole extends through the first dielectric layer and the second dielectric layer.

In a preferred embodiment the first dielectric layer and the second dielectric layer are circular.

In a preferred embodiment the first dielectric layer has a first diameter, and the second dielectric layer has a second diameter, and the first diameter and the second diameter are substantially similar.

In a preferred embodiment the electrode is disposed against a spherical surface.

According to another aspect a plasma reactor is provided comprising: a housing including a plasma chamber and a lid that is securable to the plasma housing; a liquid inlet configured to supply a liquid into the plasma chamber; a liquid outlet configured to enable liquid to exit the plasma chamber; a diffuser, operable as a counter electrode, disposed in the plasma chamber, and configured to diffuse the liquid as the liquid enters the plasma chamber; and a dielectric assembly comprising a first planar dielectric glass layer and a second planar dielectric glass layer, and a ring-shaped planar electrode sandwiched between the first planar dielectric glass layer and the second planar dielectric glass layer.

In a preferred embodiment a surface of the dielectric assembly facing the plasma chamber comprises a non-reactive coating disposed in a form of rings with a gap between each of the rings.

In a preferred embodiment the gap between each of the rings is filled with an anti-electrical field spreading compound.

According to another aspect a method of operating a plasma reactor is provided, comprising: sealing a plasma chamber with a lid; supplying liquid, via a liquid inlet, into the plasma chamber; supplying a gas into the plasma chamber; generating an electric field, between a counter electrode and a dielectric assembly, sufficient to create a plasma from the gas in the plasma chamber; and draining the liquid, via a liquid outlet, from plasma chamber, wherein the dielectric assembly comprises a first planar dielectric glass layer and a second planar dielectric glass layer, and a ring-shaped planar electrode sandwiched between the first planar dielectric glass layer and the second planar dielectric glass layer.

### BRIEF DESCRIPTION OF THE DRAWINGS

FIG. 1 is a perspective view of a plasma reactor configured to operate with a dielectric assembly, in accordance with various example embodiments.
FIG. 2 is a plan view of the plasma reactor of FIG. 1 that may incorporate the dielectric assembly, in accordance with various example embodiments.
FIG. 3 is a cross sectional view of the plasma reactor of FIG. 1, cut along line A-A of FIG. 2 and showing the location of the dielectric assembly, in accordance with various example embodiments.
FIG. 4 is a plan view of components of the dielectric assembly without a dielectric coating disposed thereon, in accordance with various example embodiments.
FIG. 5 is another plan view of the dielectric assembly showing the dielectric coating disposed thereon, in accordance with various example embodiments.
FIG. 6 is a cross sectional view of the dielectric assembly, cut along line B-B of FIG. 5, in accordance with various example embodiments.
FIG. 7 is a flow chart showing a series of operations for operating a plasma reactor with the dielectric assembly, in accordance with various example embodiments.
FIG. 8 shows a configuration for another dielectric assembly, in accordance with various example embodiments.

### DESCRIPTION OF EXAMPLE EMBODIMENTS

### Overview

In one embodiment, a dielectric assembly for a plasma reactor may include a first dielectric layer having a first surface, and a second surface opposite the first surface, a second dielectric layer, thinner than the first dielectric layer, have a third surface, and a fourth surface opposite the third surface, and an electrode disposed between the second surface and the third surface. The electrode may be ring shaped, curved, rounded, or semispherical. A non-reactive coating may be disposed on a surface of the dielectric assembly exposed to a plasma chamber of the plasma reactor. The coating may be disposed in the form of rings with a gap between each ring.

In another embodiment, a plasma reactor may include a plasma housing including a plasma chamber and a lid that is securable to the plasma housing, a fluid inlet configured to supply a fluid (e.g., a liquid or a gas) into the plasma chamber, a fluid outlet configured to enable fluid to exit the plasma chamber, a diffuser, operable as a second electrode, disposed in the plasma chamber, and configured to diffuse the fluid as the fluid enters the plasma chamber, and a dielectric assembly comprising a first dielectric layer and a second dielectric layer, and a ring-shaped planar electrode sandwiched between the first planar dielectric layer and the second planar dielectric glass.

### Example Embodiments

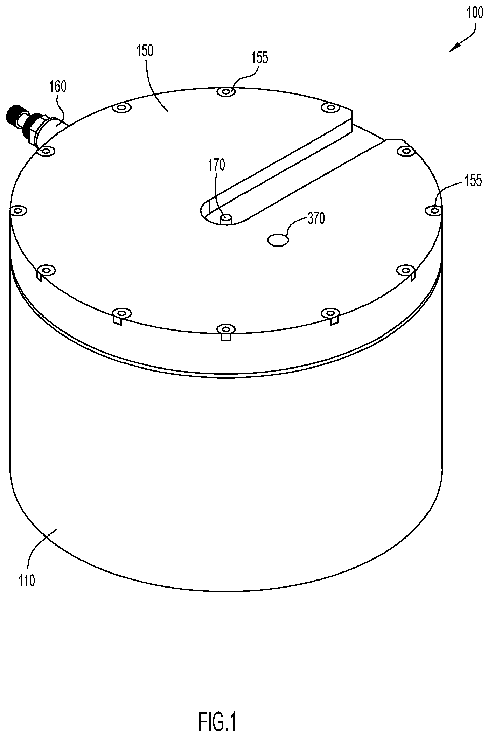

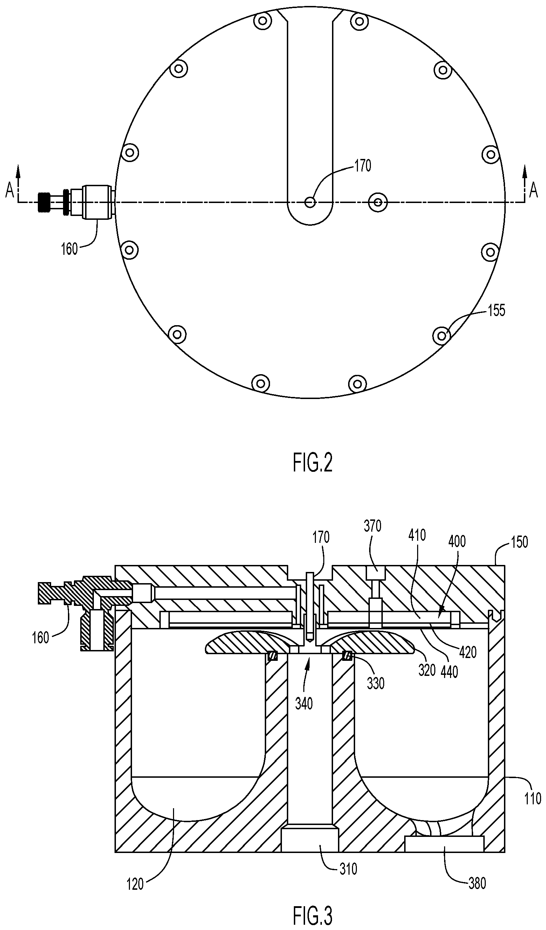

FIG. 1 is a perspective view of a plasma reactor 100 configured to operate with a dielectric assembly, in accordance with various example embodiments. As shown, plasma reactor 100 includes a reaction chamber housing 110 and a lid 150. Lid 150 includes holes to receive screws 155, or bolts, for attaching/securing lid 150 to reaction chamber housing 110, and an air flow control 160 (or valve) configured to control a volume and/or pressure of gas introduced into a reaction chamber 120 (FIG. 3). A threaded rod 170, which functions as, e.g., an electrical connection to one electrode terminal, e.g., diffuser 320, is disposed in the center of lid 150 and passes into the interior of reaction chamber housing 110, i.e., reaction chamber 120.

FIG. 2 is a plan view of the plasma reactor 100 of FIG. 1 and shows lid 150, screws 155, air flow control 160, and threaded rod 170, as well as line A-A indicative of the position of the cross-sectional view shown by FIG. 3.

As shown in FIG. 3, reaction chamber housing 110 surrounds reaction chamber 120, which may have, in possible implementations, a toroidal shape, or a U-shape, among other possible configurations. Reaction chamber housing 110 may also include an inlet 310 via which a fluid, such as a liquid (or a gas), may be introduced into reaction chamber 120, an outlet 380 via which a liquid that has passed through a plasma reaction may exit reaction chamber 120, an electrically conductive diffuser 320, which may be curved and configured to diffuse the liquid introduced in the reaction chamber 120 and acts as one (e.g., a negative, ground or counter) electrode, an O-ring 330 to seal diffuser 320 with walls of reaction chamber 120, a spreader 340, made, e.g., of ceramic or alternative non-electrically conductive material, configured to spread incoming liquid from inlet 310, onto the diffuser 320 maintaining a gap to the dielectric assembly 400 . An electrical connector 370 is configured to connect an electrode 430 in dielectric assembly 400 to an external power supply (not shown).

In operation, liquid is introduced via inlet 310 and a gas is introduced via air flow control 160 such that both pass between dielectric assembly 400 and diffuser 320 (which may act as a second (negative, ground or counter) electrode) where the gas and liquid is thus exposed to a high voltage electric field generated between dielectric assembly 400 and diffuser 320.

In a non-thermal Dielectric Barrier Discharge (DBD), or dielectrically isolated, plasma reactor, like plasma reactor 100, dielectric assembly 400 should be electrically isolated from the media (e.g., gas and/or liquid) where the plasma is created. This isolation allows for creation of a non-thermal plasma. There are several conflicting conditions and properties of this dielectric isolation that affect the quality of the plasma reaction. These conditions and properties include, for example:
1) The dielectric barrier should be able to withstand the voltage applied to the system by the plasma voltage generator, i.e., power supply (not shown). This voltage can be in excess of 1KV and is often 12KV to 20KV.
2) The dielectric barrier should ideally be able to pass the maximum amount of electric field through the dielectric barrier to the plasma zone.
3) The dielectric barrier should be able to withstand high pressures and sonic or acoustic energy created by rapid pressure changes. In a plasma reactor, one goal may be to cause molecular disassociation in a gas affected by the plasma. As a molecule is disassociated into its atomic or sub-molecular constituents, the ideal gas law applies (namely, PV=nRT where P, V, T are Pressure, Volume and Temperature, and R is a constant). Therefore, as molecules are disassociated, "n" is increased without a change in V or T, resulting in a substantial increase in pressure. This phenomenon of expanding volume based on molecular disassociation creates a sonic or ultrasonic wave in the system. This wave directly impacts the dielectric causing physical stress that can compromise the dielectric. The pressure increase (or pressure pulse) inside the reaction chamber 120 is rapid and may physically stress any dielectric.
4) Ideally, the dielectric barrier is resistant to any molecular or atomic radical resulting from ionization of the gas, is resistant to etching or degradation caused by the ionized gas, and is resistant to ionized and non-ionized particles adhering to the dielectric. More specifically, oxidation may be a problem in a plasma reactor because ionized particles created in a plasma zone contacting the dielectric may oxidize the dielectric. The ionized particles can also cause etching and/or structural degradation of any surface susceptible to oxidization. Adherence is also a problem because adhered particles (to the dielectric) can cause suboptimal performance of the dielectric, and thus detrimentally impact the desired electric field.
5) The dielectric barrier should preferably be largely impervious to liquid, which can include water, other liquids, or non-liquid chemicals transported into the plasma chamber 120 and any effluent gas or liquid, which may result from the plasma reaction.

Unfortunately, many of the above properties/conditions conflict with each other. For example, a dielectric barrier might be made stronger and impervious by making the dielectric barrier relatively thick, but such a design might decrease the maximum amount of electric field that can pass through the barrier to the plasma zone (since the increased thickness will cause more of the field to stay in the dielectric barrier and not be available for plasma generation). Thus, many non-thermal plasma reactors include overly thick/strong dielectric barriers to ensure that the dielectric barrier is structurally sound (e.g., thick enough to isolate the plasma generation voltage and withstand the physical impact of significant sonic energy) and operate at power levels that are higher than should be necessary to ensure a sufficient electric field passes through the dielectric barrier. Not only does this approach use energy inefficiently, but it also may increase material costs while reducing the efficacy of the plasma system.

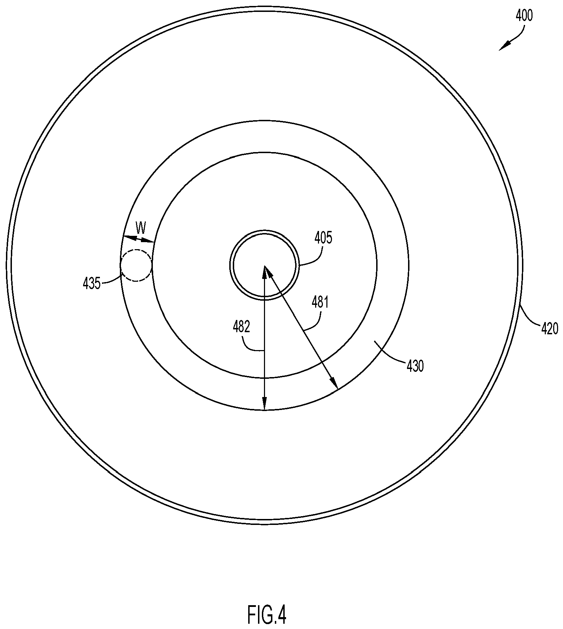

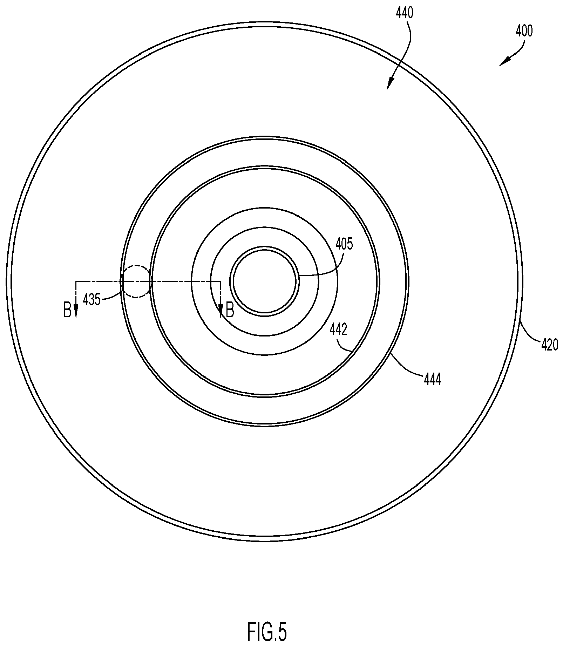

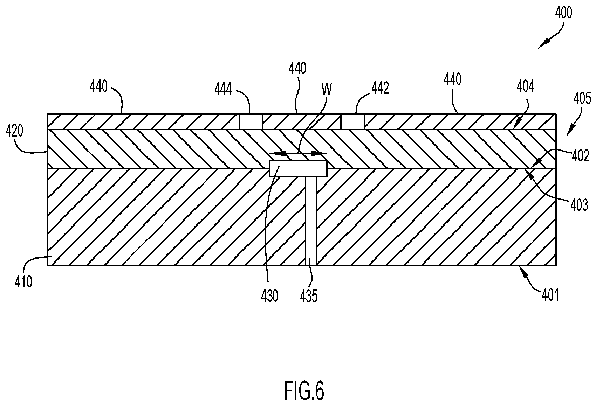

To address the foregoing conflicting conditions, and with reference now to FIGs. 4-6, the embodiments described herein provide a dielectric assembly 400 that is both rugged and provides a relatively thin dielectric that enables efficient production of an electric field.

More specifically, and with reference to FIGs. 4-6, the dielectric assembly 400 presented herein is a multi-layer structure that encases or encapsulates an electrode 430. The layers, namely a first layer 410 and a second layer 420, comprised, e.g., of glass, sapphire, epoxy, ceramic, are thin, and also have a low dielectric constant, thus optimizing the amount of electric field that can pass through the dielectric barrier, e.g., glass and a coating 440. Those skilled in the art will appreciate that glass is just but one example of possible materials that can be used for the first layer 410 and the second layer 420. The layers can each be planar or non-planar, but either way, the layers provide a strong and electrically efficient dielectric barrier. First layer 410 comprises a first surface 401 and a second surface 402, opposite the first surface 401, and second layer 420 comprises third surface 403 and fourth surface 404, opposite the third surface 403.

As shown in the figures, electrode 430 is disposed, e.g., on second layer 420 and then sandwiched between first layer 410 and second layer 420, i.e., sandwiched between second surface 402 and third surface 403. A bore 435 passes through first layer 410 enabling connection to electrical conductor 370. Electrode 430 may be aluminum, gold, silver, copper, or any other electrically conductive material, and may be deposited on second layer 420 (or first layer 410) via electro chemical deposition, glue, heat, or other process.

Surfaces of the first layer 410 and the second layer 420 that are exposed to the plasma zone (i.e., surface 404 or edges of the layers exposed to liquid and gas) may be coated with a non-reactive coating 440, such as Polytetrafluoroethylene (PTFE), to inhibit plasma generated radicals or any other particle (ionized or not) from adhering to or etching the dielectric assembly 400. In some embodiments coating 440 may be divided into separated rings disposed around center hole 405 (which extends through the first layer 410 and the second layer 420) by including, e.g., first coating gap 442 and second coating gap 444 that prevent propagation of the plasma generating electrical field along the surface of the coating 440. Such undesirable propagation can reduce the magnitude of the electrical field where it is needed. That is, the separated (and, e.g., concentric) rings (i.e., rings of coating 440 defined by first coating gap 442 and second coating gap 444) can eliminate or at least reduce field spreading. Moreover, in at least some instances, first coating gap 442 and second coating gap 444 may be filled with a non-electric (or anti-electric) field spreading compound or filler, such as silicon glue (e.g., RTV), to isolate an exposed surface of second layer 420 from the plasma zone. Such a filler may inhibit adhesion while maintaining the plasma generating field close to electrode 430.

Those skilled in the art will appreciate that in operation the exposed surface of the dielectric assembly 400 may be cleaned with a wiper, and means may be employed to provide a cleanout function in the plasma chamber 120 that allows blockages to be cleared.

As show in the drawings, electrode 430 may have width W with an inner diameter 481 and an outer diameter 482, and first coating gap 442 and second coating gap 444 may be respectively disposed radially internally and externally with respect to width W. Those skilled in the art will appreciate that other configuration may be implemented, including wherein one or both of first coating gap 442 and second coating gap 444 overlap with electrode 430.

More specific details of dielectric assembly 400 are provided below.

In one possible implementation, dielectric assembly is formed from a relatively thicker first layer 410 (e.g., a thickness greater than 1.5mm) and a relatively thinner second layer 420 (e.g., a thickness of less than 1.5mm) both comprised of glass or other dielectric material. Electrode 430 is disposed between these two layers (e.g., encased between the two layers). For example, electrode 430 may be printed or otherwise formed of the second layer 420 (or first layer 410) and then the first layer 410 may be glued (or otherwise attached) to the second layer 420 to encase electrode 430 between the two layers. In any case, this arrangement may allow stress and/or acoustic energy to be transferred to the thicker, and thus stronger, first layer 410, which may act as a backing plate.

In different instances, the first layer 410 and second layer 420 may be formed from various glass compositions, sapphire, ceramic, and/or epoxy, but the materials, e.g., glass should be strong (e.g., able to withstand sonic energy) and be relatively defect free (e.g., no occlusions) on the side exposed to the plasma zone, since defects draw power and can compromise a glass layer. Additionally, in some instances, the first layer 410 and second layer 420 are formed from the same composition/material, but in other embodiments, the two layers may be formed from different composition/material.

As an example, both layers may be made from a chemical resistant borosilicate glass with low thermal expansion, a relatively low dielectric constant and good electrical strength (e.g., produced using a float process). As other examples, Boron Nitride, AL2O3, and/or ceramics could be used for one or both of the first layer 410 and the second layer 420. Overall, the glass should have a low dielectric constant, a high dielectric withstand voltage and be able to withstand significant pressure.

As mentioned, in some embodiments, the first layer 410 is glued to or otherwise adhered to the second layer 420. In such instances, a glue may be selected so that the glue cures to a hardness (e.g., durometer) as close to the hardness (e.g., durometer) of at least the second layer 420 (if both layers are not glass) as possible, with a very similar thermal expansion coefficient. For example, the glue may be a machinable glue and/or a two-part epoxy. Then, the overall dielectric assembly 400 may have similar properties across its entire structure (or at least over a portion of the structure that is larger than one of the two layers). However, in other instances, the first layer 410 can be coupled (e.g., bonded) to the second layer 420 in any desirable manner (or formed thereon, or vice versa). For example, the layers can be coupled together with a glass frit seal or by heating one layer (e.g., the first layer 410) until it slumps and directly adheres, or fuses, to the other layer (e.g., the second layer 420).

Overall, encasing electrode 430 within two layers provides an isolated electrode with a thin dielectric capable of separating the electrode from the plasma zone to optimize the electrical field that passes into the plasma zone. At the same time, the dielectric can withstand a plasma atmosphere at least because the first layer 410 provides structural support to the second layer 420. That is, the first layer 410 may function as a non-conductive backing plate for the second layer 420. The overall effects of this arrangement may be particularly advantageous when a plasma reactor produces significant sonic pulses, even at low power, since such sonic pulses may create sonic vibration that is severely problematic for relatively weaker (e.g., thinner) dielectric barriers.

Still further, as is depicted in the figures, in at least some embodiments, the exposed side of the second layer 420 (i.e., fourth surface 404 that may be facing the plasma chamber 120) may be coated with annular rings of coating 440. As can be seen, the annular rings may be separated by breaks (i.e., first coating gap 442 and second coating gap 444) that prevent the electrical field from spreading across the entire coating (which could cause a reduction in the plasma energy). That is, an electrical connection between adjacent coating portions is broken with the gaps or breaks. As examples, the coating 440 may be Teflon or PTFE. The coating could also be specifically designed/selected for compatibility with specific chemicals.

In the depicted embodiment, first coating gap 442 and second coating gap 444 may be filled with a non-field spreading compound (i.e., a gap filler) that prevents particles from adhering to the second layer 420. However, in other embodiments, the gaps may expose portions of the second layer and may be sized to minimize the amount of water (liquid) that may be deposited into the gaps (onto the second layer 420) while still breaking the electrical connection between the rings of coating. Either way, the first coating gap 442 and second coating gap 444 can prevent the electric field from dissipating. Additionally, regardless of whether the first coating gap 442 and second coating gap 444 are filled, the gaps can be formed mechanically (e.g., via cutting, by dimensioning and/or scribing rings of coating) and/or via masking (e.g., prior to coating). Of course, in some implementations, no gaps in the coating 440 are provided.

In any of the embodiments of the present dielectric assembly 400, power may be delivered to the electrode 430 via any desirable wiring, cabling, or other conductive path. For example, bore 435 might be drilled in the first layer 410 via which an electrical conductor can pass to electrode 430.

### Possible Variations

The dielectric assembly 400 presented herein may include any number of electrodes of any shape, and power can be delivered to the one or more electrodes in any manner (e.g., collectively or independently).

The dielectric assembly 400 presented herein may be any shape or size, including planar, cylindrical, or non-planar. Likewise, the electrodes and/or coatings may have any shape or size (and need not be circular). Generally, the rings of coating 440 may follow the shape or form of one or more electrodes, including along regular or irregular shapes.

The coating 440 may include any number of rings, each of which be any size.

The coating 440 may be formed from a single or different materials, and not limited to the materials expressly mentioned herein (e.g., different rings may be formed from different materials).

The first coating gap 442 and the second coating gap 444 between coating rings need not be complete and may only partially divide the rings (e.g., a gap may provide a 95% break between rings).

The first layer 410 and the second layer 420 may be a variety of sizes and need not have uniform dimensions or regular shapes, provided the first layer 410 can act as a backing for the second layer 420.

The first layer 410 and the second layer 420 may be formed from any materials, not limited to the materials expressly mentioned herein, and may be made, e.g., of ceramic.

The non-field spreading compound (e.g., filler) may be formed from any materials, not limited to the materials expressly mentioned herein.

Not all rings of coating 440 need to be separated by filler and dielectric assembly 400 may include some combination of filled and unfilled gaps.

The dielectric assembly 400 need not necessarily include electrode 430 and, for example, might be formed around a pre-existing electrode (e.g., to retrofit a preexisting electrode with the dielectric assembly presented herein).

The present application may be embodied as at least a dielectric assembly, a dielectric barrier, a plasma reactor, a method for forming a dielectric assembly, and an electrode for a non-thermal plasma reactor.

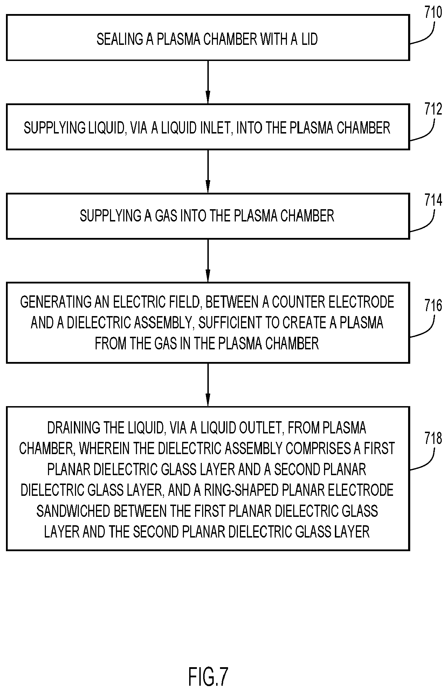

FIG. 7 is a flow chart showing a series of operations, or method, for operating a plasma reactor with the dielectric assembly, in accordance with various example embodiments. At 710, an operation includes sealing a plasma chamber with a lid. At 712, an operation includes supplying liquid, via a liquid inlet, into the plasma chamber. At 714, an operation includes supplying a gas into the plasma chamber. At 716, an operation includes generating an electric field, between a counter electrode and a dielectric assembly, sufficient to create a plasma from the gas in the plasma chamber. At 718, an operation includes draining the liquid, via a liquid outlet, from plasma chamber, and in the method the dielectric assembly comprises a first planar dielectric glass layer and a second planar dielectric glass layer, and a ring-shaped planar electrode sandwiched between the first planar dielectric glass layer and the second planar dielectric glass layer.

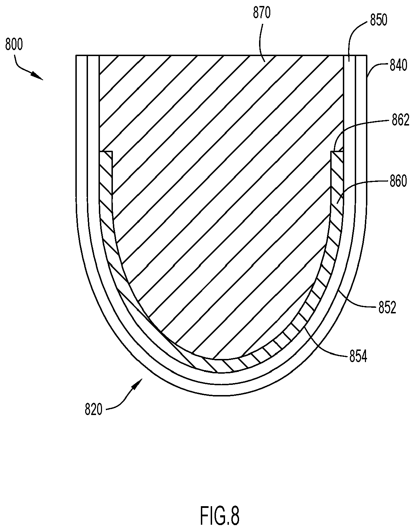

FIG. 8 shows a configuration, in schematic form, for another dielectric assembly, in accordance with various example embodiments. A dielectric assembly 800 is shown and may be substantially cylindrical with a rounded or (hemi-) spherical end 820. An outer dielectric layer 850 composed, e.g., of glass, may be coated on an outside surface 852 thereof with a coating 840, like coating 440. In this configuration, either outside surface 852 and/or coating 840 may be exposed to a plasma reaction in a plasma chamber. An electrically conductive electrode 860 may be disposed on an inside surface 854 of outer dielectric layer 850. Electrode 860 may striped, ringed, or cover some, part, or all of an inside of hemispherical end 820. A lead 862 (e.g., a wire) may be provided to enable electrode 860 to be energized by a power supply (now shown). Finally, at least the (hemi-) spherical end 820 of dielectric assembly 800 may be filled with backfill 870, or potting, which could be ceramic, epoxy, or some other material that provides increased structural integrity to dielectric assembly 800. Backfill 870 could be formed in-situ or be formed separately as a plug, and then glued or fused with inside surface 854 and/or an inside surface of electrode 860.

In sum, and in one embodiment, a device is provided. The device may be a dielectric assembly for a plasma reactor including a first dielectric layer having a first surface, and a second surface opposite the first surface, a second dielectric layer, thinner than the first dielectric layer, have a third surface, and a fourth surface opposite the third surface, and an electrode disposed between the second surface and the third surface.

In the dielectric assembly, the electrode may be planar and may be formed in a shape of a ring having a width that is defined by an inner diameter and an outer diameter.

In the dielectric assembly, the electrode may be disposed on one of the second surface and the third surface.

The dielectric assembly may further include a non-reactive coating disposed on the fourth surface.

In the dielectric assembly, the non-reactive coating may have a diameter that is greater than the outer diameter of the ring.

In the dielectric assembly, the non-reactive coating may be disposed as a plurality of concentric rings, wherein adjacent rings are separated by a gap.

In the dielectric assembly, the gap may be filled with anti-electric field spreading compound.

In the dielectric assembly, the gap may not overlap with the electrode.

In the dielectric assembly, the gap may overlap with the electrode.

In the dielectric assembly, the second surface and the third surface may be coupled to another via heat fusing.

In the dielectric assembly, the second surface and the third surface may be coupled to one another with glue.

In the dielectric assembly, the glue may have a thermal expansion coefficient that is substantially similar to a thermal expansion coefficient of the first dielectric layer and the second dielectric layer.

In the dielectric assembly, the at least one of the first dielectric layer and the second dielectric layer may be comprised of one of borosilicate glass, boron nitride, and aluminum oxide (AL₂O₃).

In the dielectric assembly, a through hole may extend through the first dielectric layer and the second dielectric layer.

In the dielectric assembly, the first dielectric layer and the second dielectric layer may be circular.

In the dielectric assembly, the first dielectric layer may have a first diameter, and the second dielectric layer may have a second diameter, and the first diameter and the second diameter may be substantially similar.

In the dielectric assembly, the electrode may be disposed against a round or (hemi-) spherical surface.

In another embodiment, a plasma reactor may include a plasma housing including a plasma chamber and a lid that is securable to the plasma housing, a liquid inlet configured to supply a liquid into the plasma chamber, a liquid outlet configured to enable liquid to exit the plasma chamber, a diffuser, operable as a counter electrode, disposed in the plasma chamber, and configured to diffuse the liquid as the liquid enters the plasma chamber, and a dielectric assembly comprising a first planar dielectric glass layer and a second planar dielectric glass layer, and a ring-shaped planar electrode sandwiched between the first planar dielectric glass layer and the second planar dielectric glass layer.

In the plasma reactor, a surface of the dielectric assembly facing the plasma chamber may include a non-reactive coating disposed in a form of rings with a gap between each of the rings.

In the plasma reactor, the gap between each of the rings may be filled with an anti-electrical field spreading compound.

In still another embodiment, a method of operating a plasma reactor may be provided including sealing a plasma chamber with a lid, supplying liquid, via a liquid inlet, into the plasma chamber, supplying a gas into the plasma chamber, generating an electric field, between a counter electrode and a dielectric assembly, sufficient to create a plasma from the gas in the plasma chamber, and draining the liquid, via a liquid outlet, from plasma chamber, wherein the dielectric assembly may include a first planar dielectric glass layer and a second planar dielectric glass layer, and a ring-shaped planar electrode sandwiched between the first planar dielectric glass layer and the second planar dielectric glass layer.

As used herein, unless expressly stated to the contrary, use of the phrase 'at least one of' 'one or more of', 'and/or', variations thereof, or the like are openended expressions that are both conjunctive and disjunctive in operation for any and all possible combination of the associated listed items. For example, each of the expressions 'at least one of X, Y and Z', 'at least one of X, Y or Z', 'one or more of X, Y and Z', 'one or more of X, Y or Z' and 'X, Y and/or Z' can mean any of the following: 1) X, but not Y and not Z; 2) Y, but not X and not Z; 3) Z, but not X and not Y; 4) X and Y, but not Z; 5) X and Z, but not Y; 6) Y and Z, but not X; or 7) X, Y, and Z.

Additionally, unless expressly stated to the contrary, the terms 'first', 'second', 'third', etc., are intended to distinguish the particular nouns they modify (e.g., element, condition, node, module, activity, operation, etc.). Unless expressly stated to the contrary, the use of these terms is not intended to indicate any type of order, rank, importance, temporal sequence, or hierarchy of the modified noun. For example, 'first X' and 'second X' are intended to designate two 'X' elements that are not necessarily limited by any order, rank, importance, temporal sequence, or hierarchy of the two elements. Further as referred to herein, 'at least one of and 'one or more of can be represented using the '(s)' nomenclature (e.g., one or more element(s)).

Each example embodiment disclosed herein has been included to present one or more different features. However, all disclosed example embodiments are designed to work together as part of a single larger system or method. This disclosure explicitly envisions compound embodiments that combine multiple previously-discussed features in different example embodiments into a single system or method.

One or more advantages described herein are not meant to suggest that any one of the embodiments described herein necessarily provides all of the described advantages or that all the embodiments of the present disclosure necessarily provide any one of the described advantages. Numerous other changes, substitutions, variations, alterations, and/or modifications may be ascertained to one skilled in the art and it is intended that the present disclosure encompass all such changes, substitutions, variations, alterations, and/or modifications as falling within the scope of the appended claims.

## Claims

1. A dielectric assembly for a plasma reactor, comprising:
a first dielectric layer having a first surface, and a second surface opposite the first surface;
a second dielectric layer, thinner than the first dielectric layer, have a third surface, and a fourth surface opposite the third surface; and
an electrode disposed between the second surface and the third surface.

2. The dielectric assembly of claim 1, wherein the electrode is planar and is formed in a shape of a ring having a width that is defined by an inner diameter and an outer diameter; wherein optionally the electrode is disposed on one of the second surface and the third surface.

3. The dielectric assembly of claim 2, further comprising a non-reactive coating disposed on the fourth surface.

4. The dielectric assembly of claim 3, wherein the non-reactive coating has a diameter that is greater than the outer diameter of the ring; .

5. The dielectric assembly of claim 3, wherein the non-reactive coating is disposed as a plurality of concentric rings, wherein adjacent rings are separated by a gap

6. The dielectric assembly of claim 5, wherein the gap is filled with anti-electric field spreading compound.

7. The dielectric assembly of claim 5, wherein the gap does not overlap with the electrode or wherein the gap overlaps with the electrode.

8. The dielectric assembly of claim 1, wherein the second surface and the third surface are coupled to another via heat fusing; or wherein the second surface and the third surface are coupled to one another with glue; wherein optionally the glue has a thermal expansion coefficient that is substantially similar to a thermal expansion coefficient of the first dielectric layer and the second dielectric layer.

9. The dielectric assembly of claim 1, wherein at least one of the first dielectric layer and the second dielectric layer is comprised of one of borosilicate glass, boron nitride, and aluminum oxide (AL₂O₃).

10. The dielectric assembly of claim 1, wherein a through hole extends through the first dielectric layer and the second dielectric layer.

11. The dielectric assembly of claim 1, wherein the first dielectric layer and the second dielectric layer are circular, wherein optionally the first dielectric layer has a first diameter, and the second dielectric layer has a second diameter, and the first diameter and the second diameter are substantially similar.

12. The dielectric assembly of claim 1, wherein the electrode is disposed against a spherical surface.

13. A plasma reactor comprising:
a plasma housing including a plasma chamber and a lid that is securable to the plasma housing;
a liquid inlet configured to supply a liquid into the plasma chamber;
a liquid outlet configured to enable liquid to exit the plasma chamber;
a diffuser, operable as a counter electrode, disposed in the plasma chamber, and configured to diffuse the liquid as the liquid enters the plasma chamber; and
a dielectric assembly comprising a first planar dielectric glass layer and a second planar dielectric glass layer, and a ring-shaped planar electrode sandwiched between the first planar dielectric glass layer and the second planar dielectric glass layer.

14. The plasma reactor of claim 13, wherein a surface of the dielectric assembly facing the plasma chamber comprises a non-reactive coating disposed in a form of rings with a gap between each of the rings; wherein optionally the gap between each of the rings is filled with an anti-electrical field spreading compound.

15. A method of operating a plasma reactor, comprising:
sealing a plasma chamber with a lid;
supplying liquid, via a liquid inlet, into the plasma chamber;
supplying a gas into the plasma chamber;
generating an electric field, between a counter electrode and a dielectric assembly, sufficient to create a plasma from the gas in the plasma chamber; and
draining the liquid, via a liquid outlet, from plasma chamber,
wherein the dielectric assembly comprises a first planar dielectric glass layer and a second planar dielectric glass layer, and a ring-shaped planar electrode sandwiched between the first planar dielectric glass layer and the second planar dielectric glass layer.
